# EUROPÄISCHE PATENTANMELDUNG

(11) **EP 1 180 668 A2**
(43) Veröffentlichungstag der Anmeldung: **20.02.2002**
(21) Anmeldenummer: 01119198.8
(22) Anmeldetag: 09.08.2001
(51) Int. Cl.: G01F 23/292

(54) **Gerät zum Prüfen der Dichtheit von Flüssigkeit aufnehmenden Bauwerken**

(30) Priorität: 19.08.2000 DE 20014375 U
(71) Anmelder: MesSen Nord Gesellschaft für Mess-, Sensor- und Datentechnik mbH, 18198 Stäbelow (DE)
(72) Erfinder: Machka, Steffen, 18190 Sanitz (DE); Kruse, Karsten, 18059 Rostock (DE)
(74) Vertreter: Schnick, Achim

(57) **Zusammenfassung**

Die Erfindung betrifft ein Gerät zur Prüfung der Dichtheit von offenen Bauwerken, insbesondere von Schächten, Sammlern und Abscheidern, die in wesentlichen Abmessungen in das Erdreich eingelassen sind und der sicheren und verlustlosen Aufnahme von Flüssigkeiten dienen. Die Aufgabe der Erfindung besteht darin, die Dichtheit von derartigen Bauwerken zu prüfen.

Die Prüfung der Dichtheit von in das Erdreich eingelassenen und der Aufnahme von Flüssigkeiten dienenden Bauwerken erfolgt mittels Messung der Pegeländerung der das Bauwerk füllenden Prüfflüssigkeit durch ein Gerät, das aus einem senkrecht in die Prüfflüssigkeit eintauchenden Meßzylinder besteht. Der Meßzylinder weist einen Meßbereich auf, zwischen dessen oberem und unterem Grenzwert sich ein vertikal geführter, auf dem Bezugspegel der Prüfflüssigkeit schwimmender Auftriebskörper befindet. Am oberen Ende des Meßzylinders ist ein zum Auftriebskörper gerichteter optoelektronischer Sensor zur Abtastung des Distanz zum Auftriebskörper angeordnet. Der Meßzylinder weist in seinem unterhalb des unteren Grenzwertes liegenden Bereich eine Öffnung für das Zuströmen der Prüfflüssigkeit in das Innere des Meßzylinders und in seinem oberhalb des oberen Grenzwertes liegenden Bereich eine Öffnung für das Entlüften des Inneren des Meßzylinders auf.

## Beschreibung

Die Erfindung betrifft ein Gerät zur Prüfung der Dichtheit von offenen Bauwerken, insbesondere von Schächten, Sammlern und Abscheidern, die in wesentlichen Abmessungen in das Erdreich eingelassen sind und der sicheren und verlustlosen Aufnahme von Flüssigkeiten dienen.

Die Dichtheit von Bauwerken, z.B. von Schächten, Sammlern und Abscheidern wird gemäß dem naheliegenden bekannten Stand der Technik durch Erfassung der Pegeländerungen des mit dem Prüfmedium gefüllten Bauwerkes mittels einer Pegel-Meßsonde geprüft. Dazu kommen im wesentlichen zwei Gerätetypen zur Anwendung.
1. Es wird die Sonde in das Prüfmedium, ca. 10 cm unterhalb des obersten Füllstandes eingetaucht und der Verlust an Prüfmedium über den damit verbundenen Druckverlust gemessen.
2. Die Pegeländerungen des Prüfmediums werden mittels einem darüber angeordneten Meßsystem über eine Abtastung der Oberfläche und die Registrierung von Veränderungen erfasst.

Beide genannten Einrichtungen haben den Nachteil, daß sich die verwendete Sensorik an der Grenze der technisch möglichen Meßauflösung und damit im gehobenen Preissegment befindet. Derart empfindliche Drucksensoren weisen zudem eine geringe Rubustheit gegenüber Transporterschütterungen auf.

Die Aufgabe der Erfindung besteht darin, die Dichtheit von in das Erdreich eingelassenen Bauwerken, wie Schächten, Sammlern und Abscheidern zu prüfen.

Erfindungsgemäß wird die Aufgabe durch die Merkmale des Anspruches 1 gelöst. Die dazugehörigen Unteransprüche weisen auf weitergehende Ausführungen der Merkmale des Anspruches 1 hin.

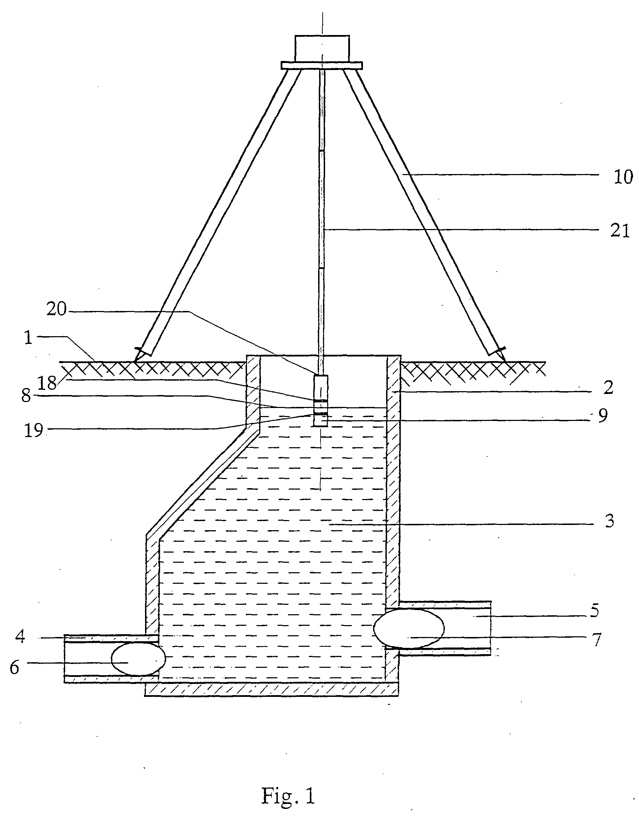

Die Erfindung soll anhand eines Ausführungsbeispiels näher erläutert werden. Die dazugehörigen Zeichnungen zeigen in
Fig. 1 den Einsatz des Gerätes bei der Prüfung der Dichtheit eines Schachtes,

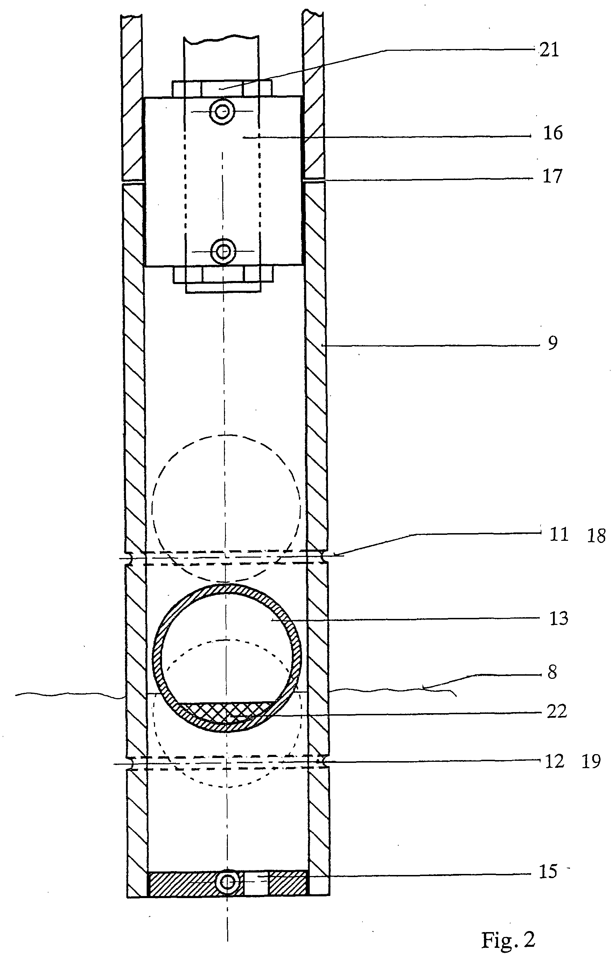

Fig. 2 einen Querschnitt durch den erfindungsgemäßen Meßzylinder,

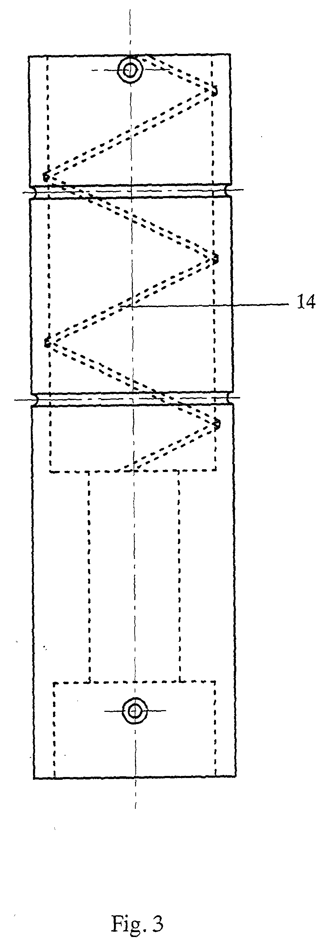

Fig. 3 einen Querschnitt durch den Meßzylinder mit einer an seiner Innenseite ausgebildeten wendelförmigen Nut.

Die Erfindung wird zur Prüfung der Dichtheit eines im Erdreich 1 eingelassenen Schachtes 2 eingesetzt, um zu ermitteln, ob der Schacht 2 Undichtigkeiten aufweist, durch die belastete Flüssigkeiten aus dem Schacht 2 unkontrolliert in das Erdreich 1 einsickern können.

Bei der Dichtheitsprüfung des Schachtes 2 durch das erfindungsgemäße Gerät gelangt vorzugsweise Wasser als Prüfflüssigkeit 3 zum Einsatz. Durch das Gerät werden Pegeländerungen der Prüfflüssigkeit 3 erfaßt, die Aufschluß über das Vorhandensein oder Nichtvorhandensein von Undichtigkeiten im Schacht 2 geben.

Die Dichtheitsprüfung beginnt mit dem Abdichten der Schachteinläufe 4,5 durch das Einsetzen von Absperrblasen 6,7 in die Einläufe 4,5 und dem anschließenden Füllen des oben offenen Schachtes 2 bis zum vorgegebenen Bezugspegel 8 in der Nähe der Oberkante des Schachtes 2 mit Prüfflüssigkeit 3. Nach dem Abwarten einer ggf. materialspezifischen Sättigungsphase wird der Bezugspegel 8 (Nullwasserstand) für die nachfolgende Dichtheitsprüfung durch das erfindungsgemäße Gerät in Verbindung mit den entsprechenden peripheren, nicht näher beschriebenen Geräteeinheiten gemessen.

Die Erfassung der Änderung des Bezugspegels 8 erfolgt über einen nachfolgend näher beschriebenen Meßzylinder 9, der über ein über der Öffnung des Schachtes 2 aufgestelltes Stativ 10 senkrecht in die Prüfflüssigkeit 3 eingetaucht wird.

Der Meßzylinder 9 ist als Hohlzylinder ausgebildet, der in seinem Inneren zwischen einem oberem Grenzwert 11 und einem unterem Grenzwert 12, die den Meßbereich des Gerätes definieren, einen vertikal frei beweglichen Auftriebskörper 13 führt. Der Auftriebskörper 13 stellt sich als Hohlkugel dar, deren Schwerpunktlage gegenüber dem räumlichen Mittelpunkt durch differenzierte Gewichtsverteilung an der Kugeloberfläche verschieden ist.

Der Meßzylinder 9 weist in seinem Boden eine Öffnung 15 auf. Oberhalb des oberen Grenzwertes 11 ist ein zum Auftriebskörper 13 gerichteter optoelektronischer Sensor 16 angeordnet, dessen Wirkungslinie in der Achse des Meßzylinders 9 verläuft. In diesem Bereich verfügt der Meßzylinder 9 über eine weitere Öffnung 17.

Der obere und der untere Grenzwert 11,12 des Meßbereiches wird an der Außenseite des Meßzylinders 9 durch eine umlaufende Markierung 18,19, beispielsweise durch eine Rille definiert.

Das Eintauchen des Meßzylinders 9 erfolgt über das Stativ 10 in der Weise, daß sich der Bezugspegel 8 etwa mittig zwischen den beiden Markierungen 18,19 einstellt. Dabei strömt die Prüfflüssigkeit 3 durch die im Boden befindliche Öffnung 15 in das Innere des Meßzylinders 9 und gelangt dort auf die Weise in Kontakt mit dem Auftriebskörper 13, daß der Auftriebskörper 13 auf dem Bezugspegel 8 schwimmt. Die vertikale Ausrichtung des Meßzylinders 9 durch das Prüfpersonal wird durch eine auf der Oberseite des Meßzylinders 9 angeordnete Dosenlibelle 20 vorgenommen. Für den Fall, daß der Bezugspegel 8 sehr tief liegt, kann der Abstand zwischen der Stativaufnahme und dem Meßzylinder 9 durch Verlängerungsstäbe 21, die durch Gewinde kuppelbar sind, überbrückt werden.

Der druckfreie Zustand im Meßzylinder 9 oberhalb des Auftriebskörpers 13 während des Eintauchens des Meßzylinders 9 in die Prüfflüssigkeit 3, während der Pegelstandsänderung und bei von außen wirkenden Pegelschwingungen wird durch eine im oberhalb des oberen Grenzwertes 11 liegenden Bereich vorgesehene Öffnung 17 für das Entlüften des Inneren des Meßzylinders 9 gehalten.

Ein gleichmäßiges Gleiten des Auftriebskörpers 13 innerhalb des Meßzylinders 9 wird durch eine an der Innenseite des Meßzylinders 9 im Meßbereich eingearbeitete wendelförmige Nut 14 unterstützt. Ohne diese Maßnahme könnten die zwischen der Innenwand des Meßzylinders 9 einerseits und dem Auftriebskörper 13 andererseits infolge des geringen Abstandes zwischen beiden Bauteilen wirkenden Adhäsionskräfte zu einer ruckenden Vertikalbewegung des Auftriebskörpers 13 und damit zur fehlerhaften Meßwerterfassung führen.

Durch die tiefliegende Anordnung des Schwerpunktes des Auftriebskörpers 13 stabilisiert sich dessen Schwimmzustand und es wird Abrollbewegungen an der Zylinderwand entgegengewirkt. Der sich in dieser Phase einstellende Bezugspegel 8 (Nullwasserstand) wird durch den Sensor 16 als Abstand des Sensors 16 zum Auftriebskörper 13 erfaßt.

Eine Leckage im Schacht 2 zieht ein unkontrolliertes Austreten von Prüfflüssigkeit 3 aus demselben in das Erdreich 1 nach sich. Damit verbunden ist die mehr oder weniger starke Absenkung des Bezugspegels 8 im Schacht 2. Diese Änderung des Bezugspegels 8 führt zu einem Absenken des Auftriebskörpers 13, dessen Abstandsänderung zum Sensor 16 durch wiederholtes Messen durch den Sensor 16 erfaßt und durch die entsprechenden peripheren Geräteeinheiten ausgewertet wird.

Die Erfassung der Änderung des Bezugspegels 8 und die Protokollerstellung kann je nach gewünschter Ausstattung, als manuelles Protokoll, als automatisches PC-Protokoll oder als Ablage im integrierten Datenspeicher (Blackbox) erfolgen. Mit Hilfe einer bereitgestellten Windows-Software ist der Anwender in der Lage, die Prüfvorhaben für das konkrete Objekt komfortabel zu ermitteln und sowohl online als auch aus den Blackbox-Daten graphische Prüfprotokolle zu erstellen.

### Aufstellung der verwendeten Bezugszeichen

- 1: Erdreich
- 2: Schacht
- 3: Prüfflüssigkeit
- 4: Schachteinlauf
- 5: Schachteinlauf
- 6: Absperrblase
- 7: Absperrblase
- 8: Bezugspegel
- 9: Meßzylinder
- 10: Stativ
- 11: Oberer Grenzwert
- 12: Unterer Grenzwert
- 13: Auftriebskörper
- 14: Nut
- 15: Öffnung
- 16: Sensor
- 17: Öffnung
- 18: Obere Markierung
- 19: Untere Markierung
- 20: Dosenlibelle
- 21: Verlängerungsstab
- 22: Gewicht

## Patentansprüche

1. Gerät zum Prüfen der Dichtheit von in das Erdreich eingelassenen und der Aufnahme von Flüssigkeiten dienenden Bauwerken mittels Messung der Pegeländerung der das Bauwerk füllenden Prüfflüssigkeit, **dadurch gekennzeichnet, daß** das Gerät aus einem senkrecht in die Prüfflüssigkeit (3) eintauchenden Meßzylinder (9) besteht, der einen Meßbereich aufweist, zwischen dessen oberem und unterem Grenzwert (11, 12) sich ein vertikal geführter, auf dem Bezugspegel (8) der Prüfflüssigkeit (3) schwimmender Auftriebskörper (13) befindet, am oberen Ende des Meßzylinders (9) ein zum Auftriebskörper (13) gerichteter optoelektronischer Sensor (16) zur Abtastung des Distanz zum Auftriebskörper (13) angeordnet ist, der Meßzylinder (9) in seinem unterhalb des unteren Grenzwertes (12) liegenden Bereich eine Öffnung (15) für das Zuströmen der Prüfflüssigkeit (3) in das Innere des Meßzylinders (9) und in seinem oberhalb des oberen Grenzwertes (11) liegenden Bereich eine Öffnung (17) für das Entlüften des Inneren des Meßzylinders (9) aufweist.

2. Gerät nach Anspruch 1, **dadurch gekennzeichnet, daß** die Öffnung (15) mit einem schmutzabweisenden Sieb versehen ist.

3. Gerät nach Anspruch 1, **dadurch gekennzeichnet, daß** die Innenseite des Meßzylinders (9) im Meßbereich eine die zwischen dem Meßzylinder (9) einerseits und dem Auftriebskörper (13) andererseits wirksamen Adhäsionskräfte minimierende, gegenüber der Innenseite zurücktretende Oberflächenstruktur aufweist.

4. Gerät nach Anspruch 2, **dadurch gekennzeichnet, daß** die Innenseite des Meßzylinders (9) im Meßbereich eine wendelförmige Nut (14) aufweist.

5. Gerät nach Anspruch 2, **dadurch gekennzeichnet, daß** die Innenseite des Meßzylinders (9) im Meßbereich am Umfang verteilte vertikale Nuten aufweist.

6. Gerät nach Anspruch 1, **dadurch gekennzeichnet, daß** der Auftriebskörper (13) einen derart tiefliegenden Schwerpunkt aufweist, daß sich der Schwerpunkt des Auftriebskörpers (13) unterhalb des Bezugspegels (8) befindet.

7. Gerät nach Anspruch 1 und 5, **dadurch gekennzeichnet, daß** der Auftriebskörper (13) als Hohlkugel ausgebildet ist, wobei an der Innenwand der Hohlkugel ein den Schwerpunkt des Auftriebskörpers (13) definierendes Gewicht (22) angeordnet ist.

8. Gerät nach Anspruch 1, **dadurch gekennzeichnet, daß** der obere und untere Grenzwert (11, 12) durch entsprechende, auf der äußeren Oberfläche des Meßzylinders (9) angeordnete Markierungen (18, 19) zur Bestimmung der Eintauchtiefe des Meßzylinders (9) vorgesehen sind.

9. Gerät nach Anspruch 1, **dadurch gekennzeichnet, daß** der Meßzylinder (9) an seiner Oberseite mit einer Dosenlibelle (20) ausgestattet ist.

10. Gerät nach Anspruch 1, **dadurch gekennzeichnet, daß** der Meßzylinder (9) an seiner Oberseite mit einem axialen Kupplungsmittel (23), vorzugsweise mit einem Gewinde, zur Aufnahme eines mit ergänzenden Kupplungsmitteln ausgestatteten Verlängerungsstabes (21) versehen ist.
